# EUROPÄISCHE PATENTSCHRIFT

(11) **EP 1 726 507 B1**
(45) Veröffentlichungstag und Bekanntmachung des Hinweises auf die Patenterteilung: **27.02.2008**
(21) Anmeldenummer: 06100324.0
(22) Anmeldetag: 13.01.2006
(51) Int. Cl.: B62D 1/16, B62D 1/20

(54) **Lenkwelle mit Gleichlaufgelenk**
Steering shaft with cardanic universal joint
Arbre de direction à cadran

(30) Priorität: 27.05.2005 DE 102005024280
(43) Veröffentlichungstag der Anmeldung: 29.11.2006
(73) Patentinhaber: ZF Lenksysteme GmbH, 73527 Schwäbisch Gmünd (DE)
(72) Erfinder: Heintschel, Manfred, 73525 Schwäbisch Gmünd (DE); Kogel, Walter, 73453 Abtsgmünd (DE); Dieterle, Günter, 73547 Lorch (DE)

(56) Entgegenhaltungen:
- EP-A- 0 915 002
- EP-A- 0 915 003
- DE-A1- 4 000 994
- DE-C- 838 552
- FR-A- 2 775 946
- PATENT ABSTRACTS OF JAPAN Bd. 1999, Nr. 05, 31. Mai 1999 (1999-05-31) -& JP 11 043050 A (NISSAN DIESEL MOTOR CO LTD), 16. Februar 1999 (1999-02-16)

## Beschreibung

Die Erfindung betrifft eine Lenkwelle, insbesondere für ein Kraftfahrzeug, zur drehmomentschlüssigen Wirkverbindung einer Lenkhandhabe mit einem gelenkten Rad, nach dem Oberbegriff des Anspruchs 1.

Lenkwellen zur drehmomentschlüssigen Wirkverbindung einer Lenkhandhabe oder eines Lenkrades mit einem gelenkten Rad mit winkligem Verlauf von Wellenteilen der Lenkwellen sind bekannt. Die Wellen werden dabei mit Wellengelenken, insbesondere mit getriebebeweglichen Wellengelenken, wie Kreuzgelenken, miteinander oder auch mit einem Lenkgetriebe oder Winkelgetriebe in dem so gebildeten Lenkstrang verbunden. Beispielsweise die DE 4000994 A oder die JP 11043050 A beschreiben eine Lenkwelle zur drehmomentschlüssigen Wirkverbindung einer Lenkhandhabe mit einem gelenkten Rad wobei zur Verbindung der Einzelkomponenten der Lenkwelle Einfach-Kardangelenke angewandt werden.

Die Lenkwellen sind aufgrund ihrer Kardangelenke in Bezug auf ihren Beugewinkel stark limitiert und weisen mit zunehmendem Beugewinkel im Betrieb bekanntermaßen zunehmende Drehungleichförmigkeiten auf. Daraus resultieren Drehmoment-schwankungen und ein beeinträchtigter Fahrkomfort. Zudem ergeben sich beim Verstellen einer mit einer solchen Lenkwelle ausgestatteten Lenksäule unterschiedliche Beugewinkel im Wellengelenk, die abhängig von der Größe des Beugewinkels die Drehungleichförmigkeiten begünstigen und dadurch entsprechende Drehmomentschwankungen am Lenkrad und damit ein unkomfortables und unpräzises Lenkgefühl hervorrufen.

Durch die Forderungen der Praxis an einen zunehmend größer werdenden Verstellbereich des Lenkrades werden diese Drehungleichförmigkeiten zunehmend größer, was den beschriebenen Nachteil verstärkt.

Der Erfindung liegt die Aufgabe zugrunde, eine Lenkwelle zu schaffen, deren Wellengelenk einen großen Verstellbereich des Beugewinkels in allen Richtungen bei gleichzeitig minimierten Drehungleichförmigkeiten der Lenkwelle ermöglicht.

Die Aufgabe wird mit einer Lenkwelle mit den Merkmalen des Anspruchs 1 gelöst.

Dadurch, dass das Wellengelenk etwa um seinen Gelenkmittelpunkt verschwenkbar mit Hilfe einer Einrichtung zur verschwenkbaren Anbringung oder Festlegung des Wellengelenks an einem fahrzeugfesten Bauteil festgelegt ist, ist ein kontrolliertes, im Sinne von homokinetischem Wellengelenk geschaffen, das über einen definierten Beugewinkelbereich in allen Richtungen der Lenkwelle (x-Richtung, y-Richtung) abwinkelbar ist. Das Wellengelenk ist durch die Einrichtung zur verschwenkbaren Anbringung des Wellengelenks an dem fahrzeugfesten Bauteil in seiner Position ständig fixiert. Die Lenkwelle kann aber dadurch dennoch seitlich ausgelenkt werden.

Bevorzugte Ausführungen ergeben sich aus den Unteransprüchen.

Bevorzugt ist das Wellengelenk als Gleichlaufgelenk ausgebildet, wobei ein innerer Gelenkkörper Rillen zur tangentialen und axialen Führung von Kugeln aufweist, und die Kugeln wieder in Rillen eines äußeren Gelenkkörpers mit einer kugeligen Aussenfläche eingreifen, und so eine Drehmomentübertragung vom äußeren auf den inneren Gelenkkörper ermöglichen, wobei die Gelenkkörper zueinander abwinkelbar sind. Das Gleichlaufgelenk ermöglicht eine Minimierung der Drehungleichförmigkeiten der Lenkwelle. Das Gleichlaufgelenk kann einfach oder als homokinetisches Doppelgleichlaufgelenk ausgebildet sein.

Die Einrichtung zur verschwenkbaren Anbringung des Wellengelenks kann aus einer jochförmigen Schwenkgabel gebildet sein, die beispielsweise von einer Welle der Lenkwelle durchragt wird und deren Schwenkachse quer zu der Welle, bevorzugt exakt durch einen Gelenkmittelpunkt des Wellengelenks oder Gleichlaufgelenks führt. Die Einrichtung zur verschwenkbaren Anbringung des Wellengelenks oder die Schwenkgabel ermöglicht so eine Lagerstelle für das Wellengelenk an einem fahrzeugfesten Bauteil. Die Lenkwelle oder eine Welle der Lenkwelle ist bevorzugt axial unverschieblich oder nur in geringem Umfang verschieblich zu der Einrichtung zur verschwenkbaren Anbringung des Wellengelenks angeordnet, kann aber relativ zu der Einrichtung kippbar sein.

Insbesondere in dem Fall, dass das Wellengelenk als Gleichlaufgelenk mit einem äußeren Gelenkkörper mit kugelförmiger Außenfläche gebildet ist, ist es zweckmäßig die punktsymmetrisch um den Gelenkmittelpunkt geformte Aussenfläche als Lagerfläche für ein Gelenklager mit dazu passgenauer kugelförmiger Innenfläche oder teilkugelförmiger Innenfläche zu nehmen und so eine Einrichtung zur verschwenk-baren Anbringung des Wellengelenks zu formen.

Das Gelenklager kann als Lagerring mit teilkugelförmiger Innenfläche gebildet sein. Der Lagerring ermöglicht einen in alle Richtungen sehr weiten Verschwenkbereich der Lenkwelle und deren Wellengelenk darin.

Die Einrichtung zur verschwenkbaren Anbringung des Wellengelenks oder der Lagerring oder die Schwenkgabel können in einfacher Weise an einer Bordwand einer Fahrerkabine des Kraftfahrzeugs festgelegt werden, wobei die Bordwand auch die Trennwand (firewall) zwischen Motorraum und Fahrerkabine der Kraftfahrzeugs oder ein fahrzeugfester Lagerbock sein kann.

Die Einrichtung zur verschwenkbaren Anbringung des Wellengelenks oder der Lagerring oder die Schwenkgabel können auch in einem Durchbruch einer Bordwand zur Durchführung der Lenkwelle oder an einem Durchbruch eines Fahrerkabinen-Bodens festgelegt sein. Der mit der erfindungsgemäßen Lenkwelle ermöglichte weite Beugungswinkelbereich und Verschwenkbereich eignet sich insbesondere um die Lenkwelle sowohl in einem Nutzkraftwagen der als Haubenfahrzeug gebildet ist, als auch als Kippkabinen-Fahrzeug gebildet ist, einzusetzen und ganz allgemein für den Einsatz in Fahrzeugen mit unterschiedlichsten, länderspezifischen Anforderungsprofilen an die Lenkung. Die Einrichtung zur verschwenkbaren Anbringung des Wellengelenks kann im wesentlichen aus Kunststoff, insbesondere aus Kunststoff-Gleitmaterial, oder aus einem Leichtmetall gebildet sein.

Die erfindungsgemäße Lenkwelle kann in einer verstellbaren Lenkwellenanordnung integriert sein, wobei die Lenkwelle mit einer Lenkwellen-Halteeinrichtung relativ zu einem fahrzeugfesten Lagerbock in ihrer Position veränderbar gestaltet ist. Die Einrichtung zur Festlegung der Position der Lenkwellen-Halteeinrichtung und/oder der Lenkwelle kann im wesentlichen innerhalb des Lagerbocks angeordnet sein, da die Lenkwelle mit ihrer Einrichtung zur verschwenkbaren Anbringung des Wellengelenks kompakt baut. In dem Lagerbock können verschiedenste Bauarten von Einrichtungen zur Festlegung der Position der Lenkwellen-Halteeinrichtung, wie eine elektrische, pneumatische, hydraulische oder mechanische Einrichtung zur Festlegung der Position der Lenkwellen-Halteeinrichtung angeordnet sein, sodaß die Lenkwelle als Teil einer universellen Lenkung für verschiedenste Fahrzeugtypen und länderspezifische Fahrzeugtypen einzusetzen ist.

Die Erfindung wird nun näher anhand eines Ausführungsbeispieles beschrieben und anhand der beiliegenden Zeichnung wiedergegeben.

Fig. 1 zeigt einen Längsschnitt durch eine Lenkwelle mit einer Einrichtung zur verschwenkbaren Anbringung eines Wellengelenks an einem fahrzeugfesten Bauteil,

Fig. 2 zeigt eine perspektivische Ansicht der Lenkwelle in Fig. 1 in gestreckter Position,

Fig. 3 zeigt eine perspektivische Ansicht der Lenkwelle in Fig. 1 in abgewinkelter Position,

Fig. 4 zeigt eine perspektivische Ansicht einer Lenkwelle mit einer als Schwenkgabel gebildeten Einrichtung zur verschwenkbaren Anbringung eines Wellengelenks an einem fahrzeugfesten Bauteil,

Fig. 5 zeigt eine perspektivische Ansicht der Lenkwelle in Fig. 4 an einer Fahrzeugkabinen-Bordwand eines Kraftfahrzeugs.

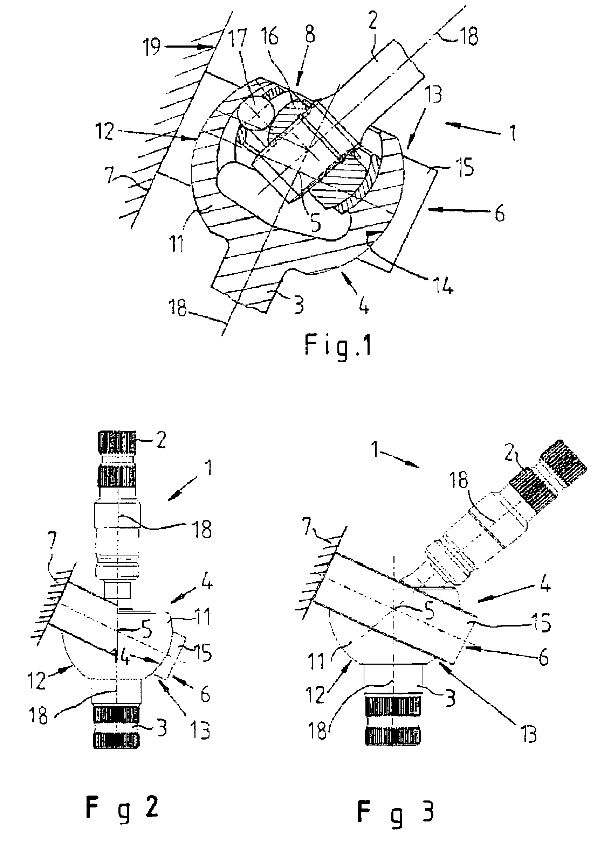

In Fig. 1 ist in einem Längsschnitt teilweise eine Lenkwelle 1 für ein Kraftfahrzeug gezeigt. Die Lenkwelle 1 dient zur drehmomentschlüssigen Verbindung einer Lenkhandhabe mit einem Lenkgetriebe und mit von diesem angetriebenen Spurstangen und Radlenkhebeln zur Lenkwinkelverstellung ein oder mehrerer gelenkter Räder des Kraftfahrzeugs. Die Lenkwelle 1 ist aus einer ersten Welle 2 und aus einer zweiten Welle 3, welche mit einem getriebebeweglichen Wellengelenk 4 drehmomentschlüssig verbunden sind, gebildet. Das Wellengelenk 4 ist mit Hilfe einer Einrichtung 6 zur verschwenkbaren Anbringung des Wellengelenks 4 an einem fahrzeugfesten Bauteil 7 gehalten. Das Wellengelenk 4 ist als Gleichlaufgelenk 8, bestehend aus einem inneren Gelenkkörper 16 und einem äußeren Gelenkkörper 11 mit einer kugelförmigen Aussenfläche 12 gebildet. Auf ihren zueinander gewandten Flächen sind in dem äußeren Gelenkkörper 11 und dem inneren Gelenkkörper 16 Rillen für Kugeln 17 eingelassen, wodurch ein Verschwenken des äußeren Gelenkkörpers 11 gegen den inneren Gelenkkörper 16 um beide Achsen ermöglicht ist und eine stetige Drehmomentübertragung über die Kugeln 17 und Rillen der beiden Gelenkkörper 11,16 ermöglicht ist. Die Einrichtung zur verschwenkbaren Anbringung des Wellengelenks 4 an dem fahrzeugfesten Bauteil 7 ermöglicht eine fixe Position der Lenkwelle 1 an dem fahrzeugfesten Bauteil 7 und zudem eine kontrollierte Verschwenkmöglichkeit der Lenkwelle 1 in Fahrtrichtung oder quer zur Fahrtrichtung und auch eine Verschwenkung in jede andere beliebige Richtung radial zu der Längsachse18 der ersten und/oder zweiten Welle 2,3 ohne dass dadurch nennenswerte Drehungleichförmigkeiten bei einer Drehbewegung der ersten und zweiten Welle 2,3 entstehen.

In dem in den Figuren 1 bis 3 gezeigten Ausführungsbeispiel einer Lenkwelle 1 ist die Einrichtung 6 zur verschwenkbaren Anbringung des Wellengelenks 4 an dem fahrzeugfesten Bauteil 7 durch ein als Lagerring 15 gebildetes Gelenklager 13 mit teilkugelförmiger Innenfläche 14 gebildet, wobei die Innenfläche 14 des Lagerrings 15 formschlüssig gleitbar auf der kugelförmigen Aussenfläche 12 des äußeren Gelenkkörpers 11 aufliegt. Der Lagerring 15 ist an dem fahrzeugfesten Bauteil 7 formschlüssig oder kraft- oder stoffschlüssig festgelegt. Die Ringform des Lagerrings 15 ermöglicht ein weitgehend freies Verschwenken der ersten Welle 2 und der zweiten Welle 3, wobei der Lagerring 15 so um den äußeren Gelenkkörper 11 gelegt ist, dass das Verschwenken immer um den Gelenkmittelpunkt 5 des Gleichlaufgelenks 8 erfolgt. Dadurch ist ein Verstellen der Lenkwelle 1 oder auch der zu ihr gehörenden Lenksäule aus einer Fahrtposition etwa in eine Ein- oder Ausstiegsposition der Lenksäule für den Fahrer des Kraftfahrzeugs und zurück in exakt reproduzierbarer Weise und ohne sich dabei einstellende oder gar ändernde Drehungleichförmigkeiten in der Lenkwelle 1 ermöglicht.

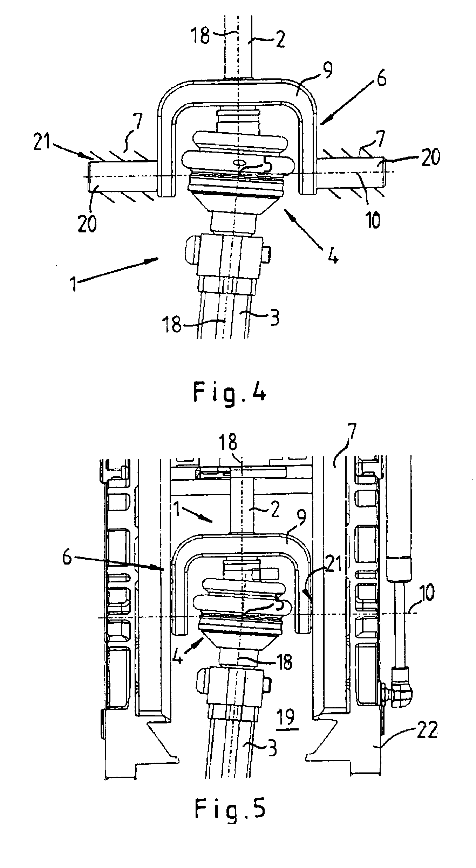

Die perspektivischen Ansichten einer Lenkwelle 1 in dem Figuren 4 und 5 zeigen eine alternative Ausführungsform einer Einrichtung 6 zur verschwenkbaren Anbringung des Wellengelenks 4 an einem fahrzeugfesten Bauteil 7, wobei das fahrzeugfeste Bauteil 7 eine firewall 19 oder ein fahrzeugfester Lagerbock 22 eines Nutzkraftwagens ist.

Eine Schwenkgabel 9 ist u-förmig oder jochförmig gebildet und von der ersten Welle 2 durchragt und axial unverschiebbar, aber drehbar an der ersten Welle 2 gehalten. Von der Schwenkgabel 9 ragen radial zu der ersten Welle 2 zu beiden Seiten je ein Schwenkzapfen 20 ab, die in einem Gleitlager 21 an der firewall 19 und/oder an dem fahrzeugfesten Lagerbock 22 drehbar gelagert sind. Die von den Schwenkzapfen 20 definierte Schwenkachse 10 geht durch den Gelenkmittelpunkt 5 des Wellenlagers 4. Die Schwenkgabel 9 kann mit dem Gleitlager 21 oder mit der ersten Welle 2 ein um alle Richtungen um die Längsachse 18 der ersten oder zweiten Welle 2,3 schwenkbares Kardangelenk bilden, sodaß auch mit dieser Einrichtung 6 ein allseitiges Verschwenken der Lenkwelle 1 in reproduzierbare Positionen möglich ist.

## Patentansprüche

1. Lenkwelle, insbesondere für ein Kraftfahrzeug, zur drehmomentschlüssigen Wirkverbindung einer Lenkhandhabe mit einem gelenkten Rad, mit einer ersten Welle (2) und mit einer zweiten Welle (3), wobei die Wellen (2,3) über ein getriebebewegliches Wellengelenk (4) drehmomentschlüssig verbunden sind, **dadurch gekennzeichnet, dass** das getriebebewegliche Wellengelenk (4) etwa um einen Gelenkmittelpunkt (5) verschwenkbar mit einer Einrichtung (6) zur verschwenkbaren Anbringung des Wellengelenks (4) an einem fahrzeugfesten Bauteil (7) festgelegt ist.

2. Lenkwelle nach Anspruch 1, **dadurch gekennzeichnet, dass** das Wellengelenk (4) ein Gleichlaufgelenk (8) ist.

3. Lenkwelle nach Anspruch 2, **dadurch gekennzeichnet, dass** das Gleichlaufgelenk (8) ein einfaches oder homokinetisches Doppelgleichlaufgelenk ist.

4. Lenkwelle nach einem der Ansprüche 1 bis 3, **dadurch gekennzeichnet, dass** die Einrichtung (6) zur verschwenkbaren Anbringung des Wellengelenks (4) aus einer Schwenkgabel (9) deren Schwenkachse (10) durch den Gelenkmittelpunkt (5) geht, gebildet ist.

5. Lenkwelle nach Anspruch 4, **dadurch gekennzeichnet, dass** die Schwenkgabel (9) axial unverschiebbar an der ersten oder zweiten Welle (2,3) angeordnet ist.

6. Lenkwelle nach Anspruch 5, **dadurch gekennzeichnet, dass** die erste Welle (2) oder die zweite Welle (3) richtungsunabhängig in der Schwenkgabel (9) kippbar angeordnet ist.

7. Lenkwelle nach einem der Ansprüche 1 bis 3, **dadurch gekennzeichnet, dass** die Einrichtung (6) zur verschwenkbaren Festlegung des Wellengelenks (4) aus einem äußeren Gelenkkörper (11) mit einer kugelförmigen Aussenfläche (12) gebildet ist, die punktsymmetrisch um den Gelenkmittelpunkt (5) ist und in einem Gelenklager (13) mit kugelförmiger oder teilkugelförmiger Innenfläche (14) gelagert ist.

8. Lenkwelle nach Anspruch 7, **dadurch gekennzeichnet, dass** das Gelenklager (13) ein Lagerring (15) ist.

9. Lenkwelle nach einem der Ansprüche 1 bis 8, **dadurch gekennzeichnet, dass** die Einrichtung (6) zur verschwenkbaren Anbringung des Wellengelenks (4) oder der Lagerring (15) oder die Schwenkgabel (9) an einer Bordwand einer Fahrerkabine des Kraftfahrzeugs festgelegt ist.

10. Lenkwelle nach einem der Ansprüche 1 bis 9, **dadurch gekennzeichnet, dass** die Einrichtung (6) zur verschwenkbaren Anbringung des Wellengelenks (4) oder der Lagerring (15) oder die Schwenkgabel (9) an einer firewall (19) oder an einem fahrzeugfesten Lagerbock (22) des Kraftfahrzeugs festgelegt ist.

11. Lenkwelle nach einem der Ansprüche 1 bis 10, **dadurch gekennzeichnet, dass** die Einrichtung (6) zur verschenkbaren Anbringung des Wellengelenks (4) an einem Durchbruch einer Bordwand einer Fahrerkabine des Kraftfahrzeugs festgelegt ist.

12. Lenkwelle nach einem der Ansprüche 1 bis 11, **dadurch gekennzeichnet, dass** die Lenkwelle (1) in einem Nutzkraftwagen mit Kippkabine oder in einem als Haubenfahrzeug ausgebildeten Nutzkraftwagen eingesetzt ist.

13. Lenkwelle nach einem der Ansprüche 1 bis 12, **dadurch gekennzeichnet, dass** die Einrichtung (6) zur verschwenkbaren Anbringung des Wellengelenks (4) aus Kunststoff-Gleitmaterial gebildet ist.

14. Lenkwelle nach einem der Ansprüche 1 bis 13, **dadurch gekennzeichnet, dass** die Lenkwelle (1) Teil einer verstellbaren Lenkwellenanordnung ist, wobei die Lenkwelle (1) mit einer Lenkwellenhalteeinrichtung relativ zu dem fahrzeugfesten Lagerbock (22) in ihrer Position veränderbar ist.

15. Lenkwelle nach Anspruch 14, **dadurch gekennzeichnet, dass** die Position der Lenkwelle (1) im Fahrzeug durch bauartverschiedene Einrichtungen zur Festlegung der Position der Lenkwellenhalteeinrichtung und/oder der Lenkwelle (1) bestimmt ist.

## Claims

1. Steering column, in particular for a motor vehicle, for torque-locked operative connection of a steering wheel or steering handle to a steered wheel, comprising a first shaft (2) and a second shaft (3), the shafts (2, 3) being connected in a torque-locked manner via a mechanically movable universal joint (4), **characterized in that** the mechanically movable universal joint (4) is fixed swivellably, approximately about a joint centre (5), to a device (6) for swivellable attachment of the universal joint (4) to a component (7) rigidly connected to the vehicle.

2. Steering column according to Claim 1, **characterized in that** the universal joint (4) is a constant-velocity joint (8).

3. Steering column according to Claim 2, **characterized in that** the constant-velocity joint (8) is a single or homokinetic, double constant-velocity joint.

4. Steering column according to any one of Claims 1 to 3, **characterized in that** the device (6) for swivellable attachment of the universal joint (4) is formed from a swivel fork (9), the swivel axis (10) of which passes through the joint centre (5).

5. Steering column according to Claim 4, **characterized in that** the swivel fork (9) is arranged in an axially non-displaceable manner on the first or second shaft (2, 3).

6. Steering column according to Claim 5, **characterized in that** the first shaft (2) or the second shaft (3) is arranged tiltably in a direction-independent manner in the swivel fork (9).

7. Steering column according to any one of Claims 1 to 3, **characterized in that** the device (6) for swivellable fixing of the universal joint (4) is formed from an outer joint body (11) with a spherical external surface (12) which is mounted point-symmetrically around the joint centre (5) and is supported in a joint bearing (13) with a spherical or part-spherical internal surface (14).

8. Steering column according to Claim 7, **characterized in that** the joint bearing (13) is a bearing cup (15).

9. Steering column according to any one of Claims 1 to 8, **characterized in that** the device (6) for swivellable attachment of the universal joint (4) or the bearing cup (15) or the swivel fork (9) is fixed to a wall panel of a driver's cab of the motor vehicle.

10. Steering column according to any one of Claims 1 to 9, **characterized in that** the device (6) for swivellable attachment of the universal joint (4) or the bearing cup (15) or the swivel fork (9) is fixed to a firewall (19) or a pedestal (22) of the motor vehicle rigidly mounted to said vehicle.

11. Steering column according to any one of Claims 1 to 10, **characterized in that** the device (6) for swivellable attachment of the universal joint (4) is fixed to an opening in a wall panel of a driver's cab of the motor vehicle.

12. Steering column according to any one of Claims 1 to 11, **characterized in that** the steering column (1) is installed in a commercial vehicle with tilting cab or in a commercial vehicle in the form of a truck with hood.

13. Steering column according to any one of Claims 1 to 12, **characterized in that** the device (6) for swivellable attachment of the universal joint (4) is made of low-friction plastics material.

14. Steering column according to any one of Claims 1 to 13, **characterized in that** the steering column (1) forms part of a displaceable steering column arrangement, the position of the steering column (1) with a steering column retaining device being variable relative to the pedestal (22) rigidly mounted to the vehicle.

15. Steering column according to Claim 14, **characterized in that** the position of the steering column (1) in the vehicle is determined by structurally different devices for fixing the position of the steering column retaining device and/or the steering column (1).

## Revendications

1. Arbre de direction, notamment pour un véhicule automobile, pour la connexion fonctionnelle par clé dynamométrique d'une prise de direction à une roue dirigée, comprenant un premier arbre (2) et un deuxième arbre (3), les arbres (2, 3) étant connectés par clé dynamométrique par le biais d'une articulation d'arbre (4) mobile par engrenage, **caractérisé en ce que** l'articulation d'arbre (4) mobile par engrenage est fixée de manière à pouvoir pivoter approximativement autour d'un centre d'articulation (5), avec un dispositif (6) pour le montage pivotant de l'articulation d'arbre (4) sur une composant (7) fixé au véhicule.

2. Arbre de direction selon la revendication 1, **caractérisé en ce que** l'articulation d'arbre (4) est une articulation à cardan (8).

3. Arbre de direction selon la revendication 2, **caractérisé en ce que** l'articulation à cardan (8) est une articulation à cardan double simple ou homocinétique.

4. Arbre de direction selon l'une quelconque des revendications 1 à 3, **caractérisé en ce que** le dispositif (6) pour le montage pivotant de l'articulation d'arbre (4) est formé d'une fourche pivotante (9) dont l'axe de pivotement (10) traverse le centre d'articulation (5).

5. Arbre de direction selon la revendication 4, **caractérisé en ce que** la fourche pivotante (9) est disposée de manière fixe axialement sur le premier ou le deuxième arbre (2, 3).

6. Arbre de direction selon la revendication 5, **caractérisé en ce que** le premier arbre (2) ou le deuxième arbre (3) est disposé de manière à pouvoir basculer dans la fourche pivotante (9) indépendamment du sens.

7. Arbre de direction selon l'une quelconque des revendications 1 à 3, **caractérisé en ce que** le dispositif (6) pour la fixation pivotante de l'articulation d'arbre (4) est formé d'un corps d'articulation extérieur (11) avec une surface extérieure sphérique (12), qui présente une symétrie centrale par rapport au centre d'articulation (5) et qui est montée dans un palier d'articulation (13) avec une surface interne (14) sphérique ou partiellement sphérique.

8. Arbre de direction selon la revendication 7, **caractérisé en ce que** le palier d'articulation (13) est une bague de palier (15).

9. Arbre de direction selon l'une quelconque des revendications 1 à 8, **caractérisé en ce que** le dispositif (6) pour le montage pivotant de l'articulation d'arbre (4) ou la bague de palier (15) ou la fourche pivotante (9) est fixé sur une paroi de bord d'une cabine de conduite du véhicule automobile.

10. Arbre de direction selon l'une quelconque des revendications 1 à 9, **caractérisé en ce que** le dispositif (6) pour le montage pivotant de l'articulation d'arbre (4) ou la bague de palier (15) ou la fourche pivotante (9) est fixé à une paroi pare-feu (19) ou à un bloc-palier (22) du véhicule automobile fixé au véhicule.

11. Arbre de direction selon l'une quelconque des revendications 1 à 10, **caractérisé en ce que** le dispositif (6) pour le montage pivotant de l'articulation d'arbre (4) est fixé au niveau d'un passage d'une paroi de bord d'une cabine de conduite du véhicule automobile.

12. Arbre de direction selon l'une quelconque des revendications 1 à 11, **caractérisé en ce que** l'arbre de direction (1) est utilisé dans un véhicule utilitaire avec une cabine basculante ou dans un véhicule utilitaire réalisé sous forme de camion à capot.

13. Arbre de direction selon l'une quelconque des revendications 1 à 12, **caractérisé en ce que** le dispositif (6) pour le montage pivotant de l'articulation d'arbre (4) est formé d'un matériau glissant en plastique.

14. Arbre de direction selon l'une quelconque des revendications 1 à 13, **caractérisé en ce que** l'arbre de direction (1) fait partie d'un agencement d'arbre de direction réglable, l'arbre de direction (1) pouvant modifier sa position par rapport au bloc-palier (22) fixé au véhicule avec un dispositif de retenue d'arbre de direction.

15. Arbre de direction selon la revendication 14, **caractérisé en ce que** la position de l'arbre de direction (1) dans le véhicule est déterminée par des dispositifs de différentes constructions pour établir la position du dispositif de retenue d'arbre de direction et/ou de l'arbre de direction (1).
